# FASCICULE DE BREVET EUROPEEN

(11) **EP 3 404 157 B1**
(45) Date de publication et mention de la délivrance du brevet: **27.11.2019**
(21) Numéro de dépôt: 18172279.4
(22) Date de dépôt: 15.05.2018
(51) Int. Cl.: E04B 1/86, E04F 13/08, E04B 1/84

(54) **PANNEAU SANDWICH À PERFORMANCES ACOUSTIQUES AMÉLIORÉES**
SANDWICHPANEEL MIT VERBESSERTER AKUSTIKLEISTUNG
SANDWICH PANEL HAVING IMPROVED ACOUSTIC PERFORMANCE

(30) Priorité: 15.05.2017 FR 1754240
(43) Date de publication de la demande: 21.11.2018
(73) Titulaire: Panneaux Sandwich Isosta, 89100 Sens (FR)
(72) Inventeur: CLER, Lionel, 89100 COURTOIS SUR YONNE (FR); GRENIER, Claire, 89100 SENS (FR)
(74) Mandataire: Cabinet Beau de Loménie

(56) Documents cités:
- EP-A2- 0 322 381
- US-B1- 8 573 357

## Description

### DOMAINE DE L'INVENTION

La présente invention a trait au domaine des matériaux de construction et plus particulièrement aux matériaux de parement notamment mais pas exclusivement pour les habitations, bureaux et locaux industriels. La présente invention concerne plus particulièrement un panneau sandwich, notamment, mais pas exclusivement, un panneau de sandwich de parement de façade.

### ETAT DE LA TECHNIQUE ANTERIEURE

Les panneaux sandwich de parement de façade connus présentent en général une pluralité de couches/plaques, toutes les couches/plaques étant collées aux couches/plaques adjacentes par leurs faces en regard afin d'assurer une certaine tenue mécanique du panneau sandwich. Toutefois, les performances d'isolation acoustique de ces panneaux connus sont généralement limitées. Il existe donc un besoin en ce sens.

US 8 573 357 divulgue un panneau sandwich selon le préambule de la revendication 1.

### PRESENTATION DE L'INVENTION

Un mode de réalisation concerne un panneau sandwich comprenant un châssis, une première plaque, une deuxième plaque opposée à la première plaque par rapport au châssis, et une couche intermédiaire comprenant au moins deux sous-couches distinctes, la couche intermédiaire étant disposée entre la première plaque et la deuxième plaque, au moins deux sous-couches étant assemblées entre-elles uniquement par collage d'une enveloppe s'étendant sur au moins un chant de la couche intermédiaire, sur tout ou partie de la face de la couche intermédiaire disposée du côté la première plaque, et sur tout ou partie de la face de la couche intermédiaire disposée du côté de la deuxième plaque, la première plaque et la deuxième plaque étant chacune fixée par collage au châssis et à la couche intermédiaire.

On comprend donc que l'enveloppe s'étend depuis une face de la couche intermédiaire en vis-à-vis de la première plaque jusqu'à la face opposée de la couche intermédiaire en vis-à-vis de la deuxième plaque, en passant sur un chant. Par la suite, on considère que ledit chant « porte une enveloppe ». Bien entendu, plusieurs chants de la couche intermédiaire peuvent porter une enveloppe. Par ailleurs, si l'enveloppe s'étend sur toute une face de la couche intermédiaire (i.e. une face en vis-à-vis de la première ou de la deuxième plaque), l'enveloppe peut s'étendre sur deux chants.

L'enveloppe peut être intégralement ou partiellement collée sur les différentes sous-couches de la couche intermédiaire. Par exemple, l'enveloppe n'est collée que sur les faces en vis-à-vis des premier et deuxième plaque, mais pas sur le chant. Ceci permet de réduire, voire éviter, les transferts thermiques et acoustiques entre les sous-couches.

Au sens de l'invention, par « intégralement collé », on entend qu'au moins 90% des surfaces en contact sont collées. De même on considère que deux parties ne sont pas collées, si moins de 5% de leurs surfaces communes sont collées. Par exemple, si de la colle a débordé sur le chant, elle s'étend généralement sur moins de 5% de la surface du chant, de sorte qu'on considère que le chant n'est pas collé à l'enveloppe.

L'enveloppe peut être par exemple une bande de ruban adhésif en papier, en plastique, renforcé par exemple une armature par exemple en fibres, ou non, métallique, etc. Selon un autre exemple, l'enveloppe est un textile. Par « textile » on entend tout matériau à base de fibres tels qu'un tissu, tricot, matériau tissé ou non tissé, un feutre, une nappe de fibres ou de fils, ou une combinaison de ces exemples.

On comprend également que la première plaque et la deuxième plaque sont collées d'une part sur le châssis et d'autre part sur la couche intermédiaire. Le collage de plaques sur la couche intermédiaire et le châssis peut être direct et/ou indirect. Par exemple, si l'enveloppe s'étend en partie sur une face de la couche intermédiaire, la plaque correspondante est collée en partie directement sur la couche intermédiaire et en partie indirectement sur la couche intermédiaire via l'enveloppe. Par exemple, la première plaque et la deuxième plaque sont intégralement collées d'une part sur le châssis et d'autre part sur la couche intermédiaire (directement et/ou indirectement sur la couche intermédiaire).

On comprend donc qu'il peut y avoir un élément intermédiaire entre une plaque et le châssis et/ou la couche intermédiaire, autre que l'enveloppe, mais pas nécessairement. Bien entendu, d'autres couches peuvent être disposées sur chaque plaque, du côté opposé à la couche intermédiaire. Selon une variante, le panneau sandwich comprend uniquement le châssis, la première plaque, la deuxième plaque, la couche intermédiaire et une ou plusieurs enveloppe(s).

On comprend que la couche intermédiaire comprend deux sous-couches ou plus. On comprend qu'au moins deux sous-couches parmi l'ensemble des sous-couches sont assemblées entre elles uniquement grâce à l'enveloppe. Par exemple, lorsqu'il y a uniquement deux sous-couches, elles ne sont assemblées entre elles que via les enveloppes. Lorsqu'il y a plus de deux sous-couches, l'ensemble des sous-couches est assemblé uniquement à l'aide des enveloppes, ou bien certaines sous-couches sont assemblées entre elles par exemple par collage (ou tout autre moyen connu) tandis qu'au moins deux sous-couches adjacentes sont assemblées uniquement à l'aide de l'enveloppe. Ainsi, les faces en vis-à-vis des sous-couches assemblées uniquement à l'aide de l'enveloppe sont en contact mais ne sont pas fixées l'une à l'autre. Ceci crée une interface entre ces sous-couches améliorant l'affaiblissement acoustique par rapport aux panneaux sandwich de l'état de la technique où les faces des sous-couches sont collées l'une à l'autre. Par ailleurs, l'enveloppe procure une certaine cohésion d'ensemble aux sous-couches, ce qui rigidifie la couche intermédiaire dans son ensemble, grâce à quoi la tenue mécanique du panneau sandwich reste acceptable.

Dans certains modes de réalisation, les au moins deux sous-couches sont assemblées entre-elles uniquement par collage de au plus deux enveloppes s'étendant sur deux chants opposés l'un par rapport à l'autre, sur tout ou partie de la face de la couche intermédiaire disposée du côté la première plaque et sur tout ou partie de la face de la couche intermédiaire disposée du côté de la deuxième plaque.

On comprend donc que la couche intermédiaire présente deux chants opposés l'un à l'autre et que seuls ces chants portent une enveloppe. Bien entendu, une seule enveloppe peut s'étendre sur ces deux chants opposés, ou bien chacun de ces chants porte une enveloppe distincte. Ainsi, si il y a deux enveloppes, chaque enveloppe s'étend sur un chant opposé, sur tout ou partie de la face de la couche intermédiaire disposée du côté la première plaque et sur tout ou partie de la face de la couche intermédiaire disposée du côté de la deuxième plaque. Si il y a une seule enveloppe, cette enveloppe s'étend sur les deux chants opposés, sur toute une portion de la couche intermédiaire s'étendant entre les deux chants opposés sur un face de la couche intermédiaire en regard d'une plaque, et sur tout ou partie d'une portion de la couche intermédiaire s'étendant entre les deux chants opposés sur la face opposée de la couche intermédiaire en regard de l'autre plaque.

Par exemple, la couche intermédiaire présente une forme générale rectangulaire, seuls les chants s'étendant selon le grand côté de la forme rectangulaire portant une enveloppe.

Une telle configuration procure une tenue mécanique satisfaisante et un bon affaiblissement acoustique tout en étant facile à fabriquer.

Dans certains modes de réalisation, l'enveloppe s'étend sur au moins 15% de la longueur moyenne de la couche intermédiaire entre le chant portant l'enveloppe et le chant opposé.

On comprend bien entendu que si le chant portant l'enveloppe n'est pas parallèle au chant opposé, la longueur moyenne entre les deux chants est la moyenne arithmétique de la longueur séparant ces deux chants sur toute l'étendue de la couche intermédiaire.

Un tel recouvrement minimal de la couche intermédiaire par l'enveloppe assure une tenue mécanique satisfaisante, un bon affaiblissement acoustique tout en étant facile à fabriquer et en permettant de réduire le coût de fabrication (en réduisant la quantité de matière d'enveloppe nécessaire).

Dans certains modes de réalisation, l'enveloppe est en textile qui présente des jours traversant qui présentent une dimension supérieure ou égale à 3 mm (trois millimètres).

Une telle distance minimale entre deux fibres adjacentes procure à l'enveloppe textile une certaine perméabilité à la colle. Ainsi, lors de l'assemblage du panneau sandwich, on peut encoller simultanément la partie de la couche intermédiaire directement en contact avec la plaque correspondante (ou un élément intermédiaire entre la plaque et la couche intermédiaire), et l'enveloppe. La colle va alors traverser l'enveloppe, de sorte que l'enveloppe sera noyée dans l'épaisseur de colle entre la couche intermédiaire et la plaque (ou un élément intermédiaire entre la plaque et la couche intermédiaire). Ceci permet une meilleure tenue mécanique, un bon affaiblissement acoustique, tout en étant facile à fabriquer et en permettant de réduire le coût de fabrication (en réduisant le nombre d'étapes nécessaires pour la fabrication du panneau sandwich).

Dans certains modes de réalisation, l'enveloppe est en textile qui présente une masse surfacique supérieure ou égale à 140 g/m² (cent quarante grammes par mètre carré).

Une telle masse surfacique permet d'assurer une résistance mécanique suffisante de l'enveloppe, notamment lorsque le panneau sandwich est soumis à des contraintes mécanique telles que le vent.

Dans certains modes de réalisation, le châssis est en bois ou équivalent, ou en polyuréthane réticulé (ou PUR).

Par « bois ou équivalent », on entend bien entendu du bois, mais également tout matériau composite à base de bois ou de cellulose, comme par exemple du bois reconstitué, de l'aggloméré, du contreplaqué, du MDF (Médium Density Fiberboard ou, en français, panneau de fibres à densité moyenne), etc.

Un châssis en bois ou équivalent, ou en polyuréthane réticulé, notamment en mousse de polyuréthane réticulé, présente une tenue mécanique satisfaisante et un amortissement acoustique bénéfique pour les performances acoustiques du panneau sandwich.

Dans certains modes de réalisation, la première plaque et/ou la deuxième plaque est/sont en verre ou équivalent, l'enveloppe s'étendant sur toute la face de la couche intermédiaire en regard de la première plaque et/ou de la deuxième plaque, respectivement.

Par « verre ou équivalent » on entend bien entendu du verre, mais également de la céramique, du grès, de la vitrocéramique, etc. Par la suite, et sauf indication contraire, par « verre » on entend « verre ou équivalent ».

On comprend bien entendu, que la face de la couche intermédiaire totalement recouverte par l'enveloppe est la face correspondant à la plaque en verre. Une telle configuration permet d'éviter de retenir collé sur l'enveloppe des éclats de verre en cas d'accident où la plaque en verre serait brisée, et ce indépendamment du matériau de la couche intermédiaire en vis-à-vis avec ladite plaque en verre. Ceci permet d'améliorer d'une part la sécurité, mais également la tenue mécanique et les performances acoustiques du panneau sandwich en cas de bris de la plaque en verre.

Dans certains modes de réalisation, l'enveloppe est en textile comprenant des fibres de verre.

Un tel textile procure une très bonne tenue mécanique.

Dans certains modes de réalisation, la couche intermédiaire comprend au moins une sous-couche parmi une sous-couche de laine de roche, une sous-couche de plâtre ou de gypse, une sous-couche en matériau viscoélastique, une sous-couche métallique, ou une combinaison de ces sous-couches.

On comprend donc que seule une sous-couche est en laine de roche, plâtre, gypse, matériau viscoélastique ou en métal, ou bien les deux sous-couches sont en laine de roche, plâtre gypse, matériau viscoélastique ou en métal. Par exemple, les sous-couches sont dans des matériaux différents. Par exemple une sous-couche est en laine de roche tandis que l'autre sous-couche est en plâtre. Par exemple, la couche intermédiaire peut présenter une troisième sous-couche en métal. Bien entendu, le nombre de sous-couches n'est pas limité à trois.

De tels matériaux et leurs différents agencements permettent d'obtenir de bonnes performances mécaniques et acoustiques, notamment pour un panneau sandwich de parement de façade.

Dans certains modes de réalisation, la première plaque et/ou la deuxième plaque est/sont en aluminium, en PVC, en acier, en fibre-ciment, en verre ou équivalent, en bois ou équivalent, ou en matériau composite à base de fibres de verre.

On comprend bien entendu que seule la première plaque est en aluminium, en PVC, en acier, en fibre-ciment, en verre ou équivalent, en bois ou équivalent ou en matériau composite à base de fibres de verre, ou bien que seule la seconde plaque est en aluminium, en PVC, en acier, en fibre-ciment, en verre ou équivalent, en bois ou équivalent ou en matériau composite à base de fibres de verre, ou encore que les deux plaques sont en aluminium, en PVC, en acier, en fibre-ciment, en verre ou équivalent en bois ou équivalent, ou en matériau composite à base de fibres de verre. Selon une variante, la première et la seconde plaques sont toutes les deux en aluminium, toutes les deux en PVC, toutes les deux en acier, ou encore toutes les deux en matériau composite à base de fibres de verre. Bien entendu la première et la deuxième plaque peuvent être dans des matériaux différents.

Par exemple, la première plaque et la deuxième plaque sont visibles et ont une fonction esthétique. Elles forment alors des plaques de parement. Toutefois, elles peuvent également, en fonction du matériau choisi, participer aux performances mécaniques et/ou acoustique du panneau sandwich. Les matériaux ci-dessus présentent de bonnes performances mécaniques et/ou acoustiques, tout en étant intéressantes du point de vue esthétique.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un exemple de panneau sandwich de parement de façade, vue en écorché, et
- la figure 2 représente un autre exemple de panneau sandwich de parement de façade, vue en écorché.

### DESCRIPTION DETAILLEE D'EXEMPLES DE REALISATION

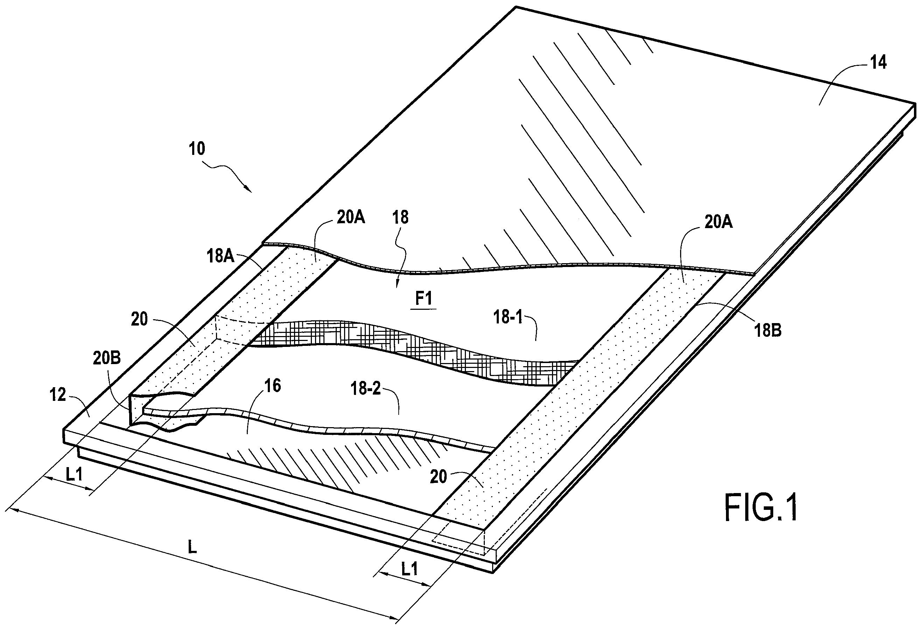

La figure 1 représente un panneau sandwich 10, et plus particulièrement dans cet exemple un panneau sandwich de parement de façade.

Le panneau 10 comprend un châssis 12 en bois, une première plaque 14 et une deuxième plaque 16 opposée à la première plaque par rapport au châssis 12. Dans cet exemple, les première et deuxième plaques 12 et 14 sont visibles et forment des plaques de parement, ou parement. Dans cet exemple, les première et deuxième plaques 12 et 14 sont en aluminium.

Le panneau 10 comprend une couche intermédiaire 18 comprenant une première sous-couche 18-1 et une deuxième sous-couche 18-2. Bien entendu, selon une variante, la couche intermédiaire présente plus de deux sous-couches. Dans cet exemple, la première sous-couche 18-1 est en laine de roche tandis que la deuxième sous-couche 18-2 est en plâtre.

Dans cet exemple, le châssis 12 forme un cadre rectangulaire, la couche intermédiaire 18 étant également rectangulaire et logée dans le cadre 12 tandis que les première et deuxième plaques 14 et 16 recouvrent le cadre 12.

Les deux chants 18A et 18B opposés s'étendant selon le plus grand côté de la forme rectangulaire de la couche intermédiaire 18 portent chacun une enveloppe 20. Dans cet exemple, l'enveloppe 20 est un textile en fibres de verre. Dans cet exemple, seuls les chants 18A et 18B portent une enveloppe.

Chaque enveloppe 20 s'étend sur le chant 18A (respectivement 18B) de la couche intermédiaire 18, sur une partie de la face F1 de la couche intermédiaire 18 disposée du côté (i.e. en regard) de la première plaque 14, et sur une partie de la face, non visible sur la figure 1, de la couche intermédiaire 18 disposée du côté de la deuxième plaque 16 (i.e. la face opposée à la face F1). Dans cet exemple, chaque enveloppe 20 s'étend, sur les faces en regard des plaques 14 et 16, sur une distance L1 égale à 15% de la distance L séparant les deux chants opposés 18A et 18B.

Pour assembler le panneau sandwich 10, on encolle la première plaque 14 sur toute sa face en regard de la couche intermédiaire 18, puis on colle le cadre 12 à la première plaque 14. Ensuite on dispose les enveloppes 20 dans le cadre 12. Ensuite on dispose la couche intermédiaire 18 au sein du cadre, et on rabat les enveloppes 20 sur la face F1. Enfin on encolle toute la face de la deuxième plaque 16 destinée à être disposée en regard de la couche intermédiaire 18, et on la colle sur le cadre 12, la couche intermédiaire 18 et les enveloppes 20. Les enveloppes 20 étant en textile présentant des jours traversant ayant une dimension d'au moins 3 mm, la colle passe au travers des portions 20A grâce à quoi les portions 20A sont noyées dans la colle fixant les première et deuxième plaques 14 et 16 à la couche intermédiaire 18. Bien entendu, on pourrait commencer l'assemblage par la deuxième plaque 16 plutôt que par la première plaque 14. On note que les portions 20B des enveloppes 20, en regard des chants 18A/18B, ne sont pas collées aux chants 18A et 18B. On note également que dans cet exemple le panneau sandwich 10 comprend uniquement le châssis 12, la première plaque 14, la deuxième plaque 16, la couche intermédiaire 18 et deux enveloppe 20.

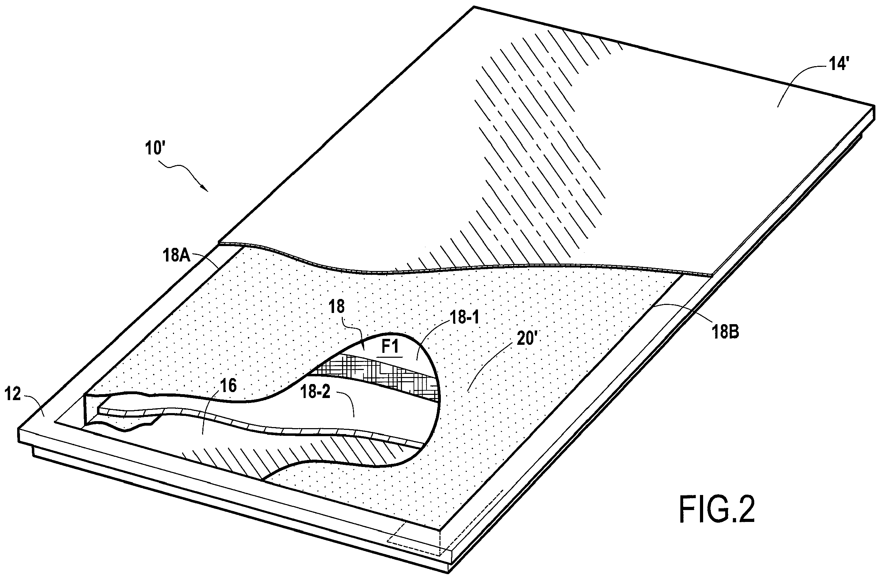

La figure 2 représente un panneau sandwich 10' identique au panneau sandwich 10 de la figure 1, à l'exception de la première plaque 14' qui est en verre, et de l'unique enveloppe 20', en textile en fibres de verre, qui remplace les deux enveloppes 20. Les autres éléments étant identiques, ils ne sont pas décrits de nouveau.

Dans cet exemple, l'enveloppe 20' s'étend sur les deux chants 18A et 18B sur toute la face F1 entre les chants 18A et 18B, et sur une longueur L1 sur la face opposé à la face F1 de la couche intermédiaire 18. Ainsi, en cas de bris de la première plaque 14' en verre, les morceaux brisés de verre restent collé à l'enveloppe 20'. L'enveloppe 20' permet de mieux retenir les bris de verres que si ils étaient collés sur la sous-couche 18-1 en laine de roche. Le procédé d'assemblage du panneau 10' est similaire au procédé décrit en référence au panneau 10 de la figure 1.

Bien entendu, l'étendue de l'enveloppe sur les faces de la couche intermédiaire peut être indépendante du matériau des plaques. Par exemple, selon une variante, l'enveloppe peut s'étendre sur toute la face opposée à la face F1, et partiellement sur la face F1. Selon encore une autre variante l'enveloppe s'étend sur toute la face F1 et sur toute la face opposée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Par exemple, sur les figures 1 et 2, la ou les enveloppes s'étendent sur tout le grand côté de la forme rectangulaire de la couche intermédiaire 18, mais elle(s) ne peu(ven)t s'étendre que sur une partie seulement de la longueur du grand côté de la forme rectangulaire de la couche intermédiaire 18. Selon encore un autre exemple, tous les chants, sur les quatre côtés de la forme rectangulaire de la couche intermédiaire 18, portent une enveloppe.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Panneau sandwich (10, 10') comprenant un châssis (12), une première plaque (14, 14'), une deuxième plaque (16) opposée à la première plaque (14, 14') par rapport au châssis (12), et une couche intermédiaire (18) comprenant au moins deux sous-couches (18-1, 18-2) distinctes, la couche intermédiaire (18) étant disposée entre la première plaque (14, 14') et la deuxième plaque (16), la première plaque (14, 14') et la deuxième plaque (16) étant chacune fixée par collage au châssis (12) et à la couche intermédiaire (18), **caractérisé en ce qu'**au moins deux sous-couches (18-1, 18-2) sont assemblées entre-elles uniquement par collage d'une enveloppe (20, 20') s'étendant sur au moins un chant (18A, 18B) de la couche intermédiaire (18), sur tout ou partie de la face (F1) de la couche intermédiaire (18) disposée du côté la première plaque (14, 14'), et sur tout ou partie de la face de la couche intermédiaire (18) disposée du côté de la deuxième plaque (16).

2. Panneau sandwich (10) selon la revendication 1, dans lequel les au moins deux sous-couches (18-1, 18-2) sont assemblées entre-elles uniquement par collage de au plus deux enveloppes (20, 20') s'étendant sur deux chants (18A, 18B) opposés l'un par rapport l'autre, sur tout ou partie de la face (F1) de la couche intermédiaire (18) disposée du côté la première plaque (14, 14') et sur tout ou partie de la face de la couche intermédiaire (18) disposée du côté de la deuxième plaque (16).

3. Panneau sandwich (10, 10') selon la revendication 1 ou 2, dans lequel l'enveloppe (20, 20') s'étend sur au moins 15% de la longueur moyenne (L) de la couche intermédiaire (18) entre le chant (18A, 18B) portant l'enveloppe (20, 20') et le chant opposé (18B, 18A).

4. Panneau sandwich (10, 10') selon l'une quelconque des revendications 1 à 3, dans lequel l'enveloppe (20, 20') est en textile qui présente des jours traversant qui présentent une dimension supérieure ou égale à 3 mm.

5. Panneau sandwich (10, 10') selon l'une quelconque des revendications 1 à 4, dans lequel l'enveloppe (20, 20') est en textile qui présente masse surfacique supérieure ou égale à 140 g/m².

6. Panneau sandwich (10, 10') selon l'une quelconque des revendications 1 à 5, dans lequel le châssis (12) est en bois ou équivalent, ou en polyuréthane réticulé.

7. Panneau sandwich (10') selon l'une quelconque des revendications 1 à 6, dans lequel la première plaque (14') et/ou la deuxième plaque est/sont en verre ou équivalent, l'enveloppe (20') s'étendant sur toute la face (F1) de la couche intermédiaire (18) en regard de la première plaque (14') et/ou de la deuxième plaque, respectivement.

8. Panneau sandwich (10, 10') selon l'une quelconque des revendications 1 à 7, dans lequel l'enveloppe (20, 20') est en textile comprenant des fibres de verre.

9. Panneau sandwich (10, 10') selon l'une quelconque des revendications 1 à 8, dans lequel la couche intermédiaire (18) comprend au moins une sous-couche (18-1, 18-2) parmi une sous-couche de laine de roche, une sous-couche de plâtre ou de gypse, une sous-couche en matériau viscoélastique, une sous-couche métallique, ou une combinaison de ces sous-couches.

10. Panneau sandwich (10, 10') selon l'une quelconque des revendications 1 à 9, dans lequel la première plaque (14, 14') et/ou la deuxième plaque (16) est/sont en aluminium, en PVC, en acier, en fibre-ciment, en verre ou équivalent, en bois ou équivalent, ou en matériau composite à base de fibres de verre.

## Patentansprüche

1. Sandwich-Paneel (10, 10'), das einen Rahmen (12), eine erste Platte (14, 14'), eine zweite Platte (16), die der ersten Platte (14, 14') in Bezug auf den Rahmen (12) gegenüberliegt, und eine Zwischenschicht (18) umfasst, die zumindest zwei separate Teilschichten (18-1, 18-2) umfasst, wobei die Zwischenschicht (18) zwischen der ersten Platte (14, 14') und der zweiten Platte (16) angeordnet ist und die erste Platte (14, 14') und die zweite Platte (16) jeweils durch Verkleben an dem Rahmen (12) und der Zwischenschicht (18) fixiert sind, **dadurch gekennzeichnet, dass** zumindest zwei Teilschichten (18-1, 18-2) nur durch Aufkleben einer Umhüllung (20, 20') zusammen angeordnet sind, die sich über zumindest eine Kante (18A, 18B) der Zwischenschicht (18), über einen Teil der oder die gesamte Fläche (F1) der Zwischenschicht (18), die auf der Seite der ersten Platte (14, 14') angeordnet ist, und über einen Teil der oder die gesamte Fläche der Zwischenschicht (18), die auf der Seite der zweiten Platte (16) angeordnet ist, erstreckt.

2. Sandwich-Paneel (10) nach Anspruch 1, wobei die zumindest zwei Teilschichten (18-1, 18-2) nur durch Aufkleben von höchstens zwei Umhüllungen (20, 20') zusammen angeordnet sind, die sich über zwei Kanten (18A, 18B), die einander gegenüberliegen, über einen Teil der oder die gesamte Fläche (F1) der Zwischenschicht (18), die auf der Seite der ersten Platte (14, 14') angeordnet ist, und über einen Teil der oder die gesamte Fläche der Zwischenschicht (18), die auf der Seite der zweiten Platte (16) angeordnet ist, erstrecken.

3. Sandwich-Paneel (10, 10') nach Anspruch 1 oder 2, wobei die Umhüllung (20, 20') sich über zumindest 15 % der mittleren Länge (L) der Zwischenschicht (18) zwischen der Kante (18A, 18B), welche die Umhüllung (20, 20') trägt, und der gegenüberliegenden Kante (18B, 18A) erstreckt.

4. Sandwich-Paneel (10, 10') nach einem der Ansprüche 1 bis 3, wobei die Umhüllung (20, 20') aus einem Stoff besteht, der Durchgangsöffnungen aufweist, die eine Dimension von mehr als oder gleich 3 mm aufweisen.

5. Sandwich-Paneel (10, 10') nach einem der Ansprüche 1 bis 4, wobei die Umhüllung (20, 20') aus einem Stoff besteht, der ein Flächengewicht von mehr als oder gleich 140 g/m² aufweist.

6. Sandwich-Paneel (10, 10') nach einem der Ansprüche 1 bis 5, wobei der Rahmen (12) aus Holz oder einem gleichwertigen Material oder aus vernetztem Polyurethan besteht.

7. Sandwich-Paneel (10') nach einem der Ansprüche 1 bis 6, wobei die erste Platte (14') und/oder die zweite Platte aus Glas oder einem gleichwertigen Material besteht/bestehen und sich die Umhüllung (20') über die gesamte Fläche (F1) der Zwischenschicht (18) erstreckt, die jeweils zu der ersten Platte (14') und/oder der zweiten Platte hin weist.

8. Sandwich-Paneel (10, 10') nach einem der Ansprüche 1 bis 7, wobei die Umhüllung (20, 20') aus einem Stoff besteht, der Glasfasern umfasst.

9. Sandwich-Paneel (10, 10') nach einem der Ansprüche 1 bis 8, wobei die Zwischenschicht (18) zumindest eine Teilschicht (18-1, 18-2) aus einer Teilschicht aus Steinwolle, einer Teilschicht aus Gipskalk oder Gips, einer Teilschicht aus einem viskoelastischen Material, einer metallischen Teilschicht oder einer Kombination dieser Teilschichten umfasst.

10. Sandwich-Paneel (10, 10') nach einem der Ansprüche 1 bis 9, wobei die erste Platte (14, 14') und/oder die zweite Platte (16) aus Aluminium, aus PVC, aus Stahl, aus Faserzement, aus Glas oder einem gleichwertigen Material, aus Holz oder einem gleichwertigen Material oder aus einem Verbundmaterial auf Glasfaserbasis besteht/bestehen.

## Claims

1. A sandwich panel (10, 10') comprising a frame (12), a first plate (14, 14'), a second plate (16) opposite the first plate (14, 14') relative to the frame (12), and an intermediate layer (18) comprising at least two distinct sub-layers (18-1, 18-2), the intermediate layer (18) being disposed between the first plate (14, 14') and the second plate (16), the first plate (14, 14') and the second plate (16) being each fixed by bonding to the frame (12) and to the intermediate layer (18), **characterized in that** at least two sub-layers (18-1, 18-2) are assembled together only by bonding of a wrapping (20, 20') extending over at least one edge (18A, 18B) of the intermediate layer (18), over all or part of the face (F1) of the intermediate layer (18) disposed on the side of the first plate (14, 14'), and over all or part of the face of the intermediate layer (18) disposed on the side of the second plate (16).

2. The sandwich panel (10) according to claim 1, wherein the at least two sub-layers (18-1, 18-2) are assembled together only by bonding of at most two wrappings (20, 20') extending over two edges (18A, 18B) opposite to each other, over all or part of the face (F1) of the intermediate layer (18) disposed on the side of the first plate (14, 14') and over all or part of the face of the intermediate layer (18) disposed on the side of the second plate (16).

3. The sandwich panel (10, 10') according to claim 1 or 2, wherein the wrapping (20, 20') extends over at least 15% of the average length (L) of the intermediate layer (18) between the edge (18A, 18B) bearing the wrapping (20, 20') and the opposite edge (18B, 18A).

4. The sandwich panel (10, 10') according to any one of 1 to 3, wherein the wrapping (20, 20') is made of textile which presents through apertures of a dimension greater than or equal to 3 mm.

5. The sandwich panel (10, 10') according to any one of claims 1 to 4, wherein the wrapping (20, 20') is made of textile which has a basis weight greater than or equal to 140 g/m².

6. The sandwich panel (10, 10') according to any one of claims 1 to 5, wherein the frame (12) is made of wood or the like, or of crosslinked polyurethane.

7. The sandwich panel (10') according to any one of claims 1 to 6, wherein the first plate (14') and/or the second plate is/are made of glass or the like, the wrapping (20') extending over the entire face (F1) of the intermediate layer (18) facing the first plate (14') and/or the second plate, respectively.

8. The sandwich panel (10, 10') according to any one of claims 1 to 7, wherein the wrapping (20, 20') is made of textile comprising fiberglass.

9. The sandwich panel (10, 10') according to any one of claims 1 to 8, wherein the intermediate layer (18) comprises at least one sub-layer (18-1, 18-2) among a rock wool sub-layer, a plaster or gypsum sub-layer, a sub-layer made of viscoelastic material, a metal sub-layer, or a combination of these sub-layers.

10. The sandwich panel (10, 10') according to any one of claims 1 to 9, wherein the first plate (14, 14') and/or the second plate (16) is/are made of aluminum, PVC, steel, fiber cement, glass or the like, wood or the like or fiberglass-based composite material.
